# EUROPEAN PATENT APPLICATION

(11) **EP 3 168 510 A1**
(43) Date of publication of application: **17.05.2017**
(21) Application number: 14900847.6
(22) Date of filing: 25.08.2014
(51) Int. Cl.: F16J 15/447, F04D 29/10

(54) **SEAL MECHANISM AND ROTATING MACHINE**

(71) Applicant: Mitsubishi Heavy Industries, Ltd., Tokyo 108-8215 (JP); Mitsubishi Heavy Industries Compressor Corporation, Minato-ku Tokyo 108-0014 (JP)
(72) Inventor: NAKANIWA, Akihiro, Tokyo 108-8215 (JP); TOKUYAMA, Shinichiro, Hiroshima-shi Hiroshima 733-8553 (JP)
(74) Representative: Studio Torta S.p.A.
(86) International application number: PCT/JP2014/072203
(87) International publication number: WO 2016/030952

(57) **Abstract**

A seal mechanism (20A) is disposed on an outer circumferential side of a rotor (2) extending along an axis (O) to perform sealing between the seal mechanism and the outer circumferential surface (2a) of the rotor (2). The seal mechanism (20A) includes a main body portion (21A) having a cylindrical shape, and into which the rotor (2) is inserted; and a plurality of hole portions (22) formed on an inner circumferential surface of the main body portion (21A) to face an outer circumferential surface of the rotor (2). The hole portions (22) are within a range in which a hole depth h is equal to or smaller than a hole diameter d.

## Description

### [Technical Field]

The present invention relates to a seal mechanism provided in a rotating machine such as a turbine, and a rotating machine.

### [Background Art]

A centrifugal compressor which compresses gas is widely known as one of rotating machines. In the centrifugal compressor, an impeller is provided inside the casing, and gas suctioned from a suction port is compressed by the rotation of the impeller and is discharged from a discharge port.

Here, a mouthpiece seal is provided in an impeller mouthpiece portion, an intermediate stage seal is provided between the impeller stages, and a balance piston portion seal is provided in a final stage, thereby reducing the amount of leakage of the gas compressed by the impeller. For example, in some cases, a damper seal, a labyrinth seal or the like may be used for such various kinds of seal.

In many cases, for example, the labyrinth seal is configured by alternately providing annular protrusions provided on a rotating rotary shaft, and protrusions protruding annularly toward the rotary shaft from a stationary side member facing the rotary shaft at an interval therebetween, along the rotary shaft. In this labyrinth seal, it is possible to reduce leakage of fluid by causing a pressure loss in the fluid flowing in the vicinity of the tip of the protrusions.

A honeycomb seal, a hole pattern seal and the like are known as a damper seal. For example, in the hole pattern seal, in an annular stationary side member disposed at an interval from a rotary shaft, a plurality of hole portions are formed in a facing surface facing the rotary shaft, and the leakage of fluid can be reduced by a pressure loss occurring in the hole portions (see, for example, Patent Document 1).

The hole pattern seal has an attenuation effect greater than that of the labyrinth seal, and is advantageous in terms of stabilization of oscillation of the rotary shaft. On the other hand, the labyrinth seal can reduce the amount of leakage of fluid as compared to the damper seal.

Incidentally, in some cases, the seal structure may be subjected to self-excited vibration by a swirl flow (hereinafter, simply referred to as swirling) of inflowing fluid. In the seal structure, it is necessary to set a clearance so that the stationary side and the rotary side do not come into contact with each other by the self-excited vibration. For this reason, in the non-contact type seal mechanism, it is not possible to reduce the clearance and it is difficult to further reduce the amount of leakage of the fluid.

Here, in the seal structure using the hole pattern seal, it is possible to suppress swirling by causing the swirl flow generated in the hole portion to interfere with the swirling.

### [Citation List]

### [Patent Literature]

[Patent Document 1] Japanese Unexamined Patent Application, First Publication No. 2010-38114

### [Summary of Invention]

### [Technical Problem]

As described above, it is possible to reduce the swirling by the swirl flow generated in the hole pattern seal. However, since it is not possible to completely cancel out the swirling, it is desirable to further reduce the swirling.

An object of the present invention is to provide a seal mechanism and a rotating machine capable of further reducing the swirling generated between the rotary side and the stationary side and limiting the self-excited vibration due to the swirling, while reducing the amount of leakage of the process gas G from the high-pressure side to the low-pressure side.

### [Solution to Problem]

According to a first aspect of the present invention, there is provided a seal mechanism which is disposed on an outer circumferential side of a rotor extending along an axis to perform sealing between the seal mechanism and the outer circumferential surface of the rotor. The seal mechanism includes a cylindrical main body portion into which the rotor is inserted; and a plurality of hole portions formed on an inner circumferential surface of the main body portion to face an outer circumferential surface of the rotor. The hole portions have a hole depth h within a range equal to or smaller than a hole diameter d.

According to a second aspect of the present invention, in the seal mechanism according to the first aspect, the hole portions may be formed such that a relationship between the hole depth h and the hole diameter d is 0.5d ≤ h ≤ d.

According to a third aspect of the present invention, in the seal mechanism according to the first aspect, the hole portions may have a circular cross-section or a hexagonal cross-section.

According to a fourth aspect of the present invention, in the seal mechanism according to any one of the first to third aspects, the hole diameters d and the hole depths h of the plurality of hole portions may be of a uniform size,.

According to a fifth aspect of the present invention, in the seal mechanism according to any one of the first to fourth aspects, bottom surfaces of the hole portions may have a conical shape or a flat bottom shape.

According to a sixth aspect of the present invention, in the seal mechanism according to any one of the first to fifth aspects, a fin portion protruding toward the rotor side and extending in a circumferential direction may be provided on an inner circumferential surface of the main body portion.

According to a seventh aspect of the present invention, a rotating machine includes a rotor extending along an axis; and a stator which is disposed on an outer circumferential side of the rotor and relatively rotates about the axis with respect to the rotor. The rotating machine further includes a hole pattern seal which is fixed to the stator to partition a space between the rotor and the stator into a high-pressure side and a low-pressure side, and has hole rows in which a plurality of hole portions facing the outer circumferential surface of the rotor are formed at an interval therebetween in a circumferential direction. The hole portions of the rotating machine are within a range in which a hole depth is equal to or smaller than a hole diameter.

According to an eighth aspect of the present invention, the rotating machine according to the seventh aspect may include a fin portion which is formed on the inner circumferential surface of the hole pattern seal, protrudes toward the rotor side and extends in the circumferential direction. The rotating machine may further include a protruding portion which protrudes from the outer circumferential surface of the rotor toward the hole portion, extends in the circumferential direction and faces the hole portion on the low-pressure side of the fin portion.

### [Advantageous Effects of Invention]

According to the aforementioned seal mechanism and rotating machine, it is possible to further reduce the swirling generated between the rotary side and the stationary side and to limit self-excited vibration due to the swirling, while reducing the amount of leakage of the process gas G from the high-pressure side to the low-pressure side.

### [Brief Description of Drawings]

Fig. 1 is a cross-sectional view showing a schematic configuration of a centrifugal compressor according to first and second embodiments of the present invention.
Fig. 2 is a perspective view showing a hole pattern seal of the seal mechanism of the centrifugal compressor according to the first embodiment of the present invention.
Fig. 3 is a partial cross-sectional view of the seal mechanism of the centrifugal compressor according to the first embodiment of the present invention.
Fig. 4 is an expanded view of an inner circumferential surface of the hole pattern seal according to the first embodiment of the present invention.
Fig. 5 is a diagram showing a result of analysis of a relationship between the hole depth and equivalent attenuation in the example of the first embodiment of the present invention.
Fig. 6 is a perspective view showing a hole pattern seal in a seal mechanism of a centrifugal compressor according to a second embodiment of the present invention.
Fig. 7 is an expanded view of the inner circumferential surface of the hole pattern seal according to the second embodiment of the present invention.
Fig. 8 is a partial cross-sectional view of the seal mechanism in the centrifugal compressor according to the second embodiment of the present invention.
Fig. 9 is an explanatory view of the operation of the seal mechanism in the second embodiment of the present invention.

### [Description of Embodiments]

### (First Embodiment)

Hereinafter, a centrifugal compressor as a rotating machine according to a first embodiment of the present invention will be described with reference to the drawings.

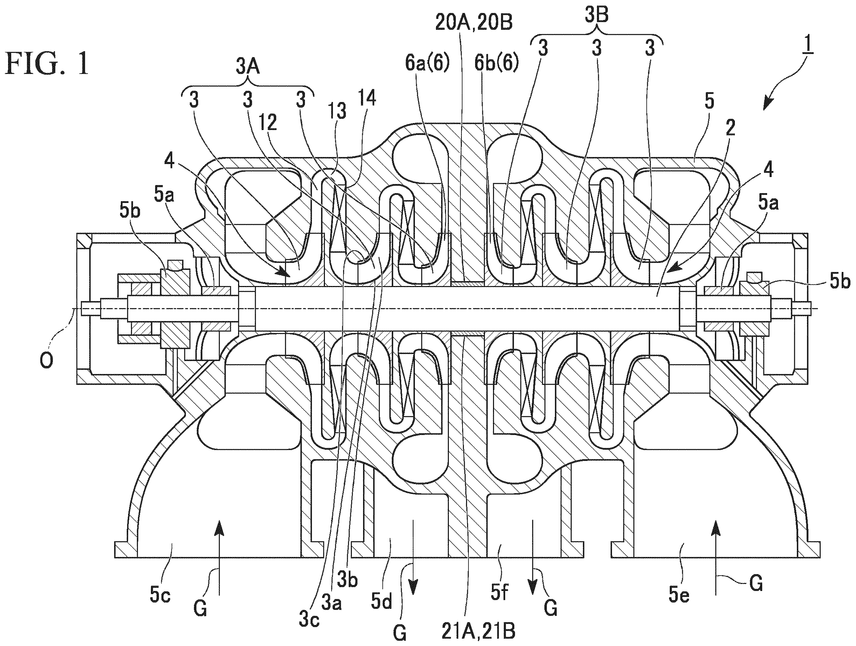

Fig. 1 is a cross-sectional view showing a schematic configuration of a centrifugal compressor 1 according to a first embodiment of the present invention.

As shown in Fig. 1, the centrifugal compressor 1 in this embodiment is a multistage centrifugal compressor. The centrifugal compressor 1 includes, for example, two sets of three-stage impeller groups.

The centrifugal compressor 1 includes a rotary shaft (rotor) 2, an impeller 3, a casing (stator) 5 and a seal mechanism 20A.

The rotary shaft 2 rotates around the axis O.

The impeller 3 is mounted on the rotary shaft 2 and compresses the process gas (fluid) G using a centrifugal force.

The casing 5 rotatably supports the rotary shaft 2. The casing 5 has a return flow passage 4 formed therein through which the process gas G flows from the high-pressure side to the low-pressure side.

The seal mechanism 20A is provided along the outer circumferential surface of the rotary shaft 2.

The casing 5 is formed in a columnar shape having a circular cross-sectional profile. The rotary shaft 2 is disposed to penetrate the center of the casing 5. A journal bearing 5a and a thrust bearing 5b are provided at opposing end portions of the casing 5. The opposing end portions of the rotary shaft 2 are rotatably supported by the journal bearings 5a and the thrust bearings 5b. In other words, the rotary shaft 2 is supported by the casing 5 via the journal bearings 5a and the thrust bearings 5b.

Suction ports 5c and 5e for suctioning the process gas G from the outside in the radial direction are provided on the side surfaces near the opposing end portions of the casing 5. Discharge ports 5d and 5f are provided at the central portion of the casing 5 in the direction of the axis O to discharge the process gas G outward in the radial direction. The casing 5 is provided with an internal space 6a (6) for communicating the suction port 5c and the discharge port 5d each other, and an internal space 6b for communicating the suction port 5e and discharge port 5f each other.

A plurality of impellers 3 housed in the casing 5 constitute two sets of a three-stage impeller group 3A and a three-stage impeller group 3B in which the directions of the blades 3b in the direction of the axis O of the rotary shaft 2 face sides opposite to each other. The three-stage impeller group 3A and the three-stage impeller group 3B are mounted on the rotary shaft 2 in a state in which their back surfaces face the center in the direction of the axis O.

The impeller 3 includes a disk 3a, a blade 3b, and a cover portion 3c.

The disk 3a is formed in a substantially disc shape which gradually enlarges in diameter toward the discharge ports 5d and 5f in the direction of the axis O.

The blade 3b is formed radially on the disk 3a. That is, a plurality of the blades 3b are arranged in the circumferential direction.

The cover portion 3c is formed in a disc shape to cover the tip sides of the plurality of blades 3b.

The impellers 3 constituting the three-stage impeller group 3A and the impellers 3 constituting the three-stage impeller group 3B are directed in directions opposite to each other in the direction of the axis O. When the rotary shaft 2 is rotated, the three-stage impeller group 3A flows and compresses the process gas G from the suction port 5c toward the discharge port 5d. On the other hand, the three-stage impeller group 3B flows and compresses the process gas G from the suction port 5e toward the discharge port 5f.

The internal space 6 is provided with a return flow passage 4. The return flow passage 4 flows the process gas G from the flow passage outlet of the impeller 3 toward the flow passage inlet. The return flow passage 4 has a diffuser portion 12, a bend portion 13, and a return portion 14. The diffuser portion 12 guides the process gas G, which has been compressed by the impeller 3 and discharged outward in the radial direction from the flow passage outlet of the impeller 3, to the outside in the radial direction.

The radially outer portion of the diffuser portion 12 communicates with the return portion 14 via a bend portion 13. However, instead of the return portion 14, discharge ports 5d and 5f are formed in the radially outer portion of the diffuser portion 12 connected to the third stage impellers 3 of each of the three-stage impeller group 3A and the three-stage impeller group 3B.

The bend portion 13 forms a curved flow passage. The first end on the upstream side of the bend portion 13 is connected to the diffuser portion 12. The second end on the downstream side of the bend portion 13 is connected to the return portion 14. The bend portion 13 reverses the direction of the process gas G flowing outward in the radial direction through the diffuser portion 12 so as to be directed inward in the radial direction and sends the process gas G to the return portion 14. The return portion 14 is connected to the second end of the bend portion 13 on the radially outer side. The return portion 14 is connected to the flow passage inlet of the impeller 3 on the radially inner side.

The centrifugal compressor 1 of this embodiment includes the aforementioned configuration. Next, the operation of the centrifugal compressor 1 will be described.

First, in the three-stage impeller group 3A, the process gas G suctioned from the suction port 5c is caused to flow into the return flow passage 4, and is compressed, while flowing from the first stage to the third stage in the order of the impeller 3, the diffuser portion 12, the bend portion 13 and the return portion 14. Thereafter, the compressed process gas G flowing to the third stage diffuser portion 12 is discharged from the discharge port 5d. The process gas G discharged from the discharge port 5d is sent to the suction port 5e through a pipe line (not shown) leading from the discharge port 5d to the suction port 5e.

Next, in the three-stage impeller group 3B, the process gas G suctioned from the suction port 5e is caused to flow into the return flow passage 4, and is further compressed, while flowing from the first stage to the third stage in the order of the impeller 3, the diffuser portion 12, the bend portion 13 and the return portion 14. Thereafter, the compressed process gas G that has reached the third stage diffuser portion 12 is discharged from the discharge port 5f.

As compared to the process gas G near the discharge port 5d of the three-stage impeller group 3A, the process gas G near the discharge port 5f of the three-stage impeller group 3B reaches a high pressure only by being compressed by the three-stage impeller group 3B. That is, a pressure difference is generated between the process gas G around the rotary shaft 2 near the discharge port 5d in the direction of the axis O and the process gas G around the rotary shaft 2 near the discharge port 5f in the direction of the axis O. Therefore, between the impellers 3 of each third stage, a seal mechanism 20A is provided which partitions the high-pressure side and the low-pressure side of the rotary shaft 2 in the direction of the axis O to prevent leakage of the process gas G, while allowing rotation of the rotary shaft 2. The seal mechanism 20A is disposed on the outer circumferential side of the rotary shaft 2 and is rotatable around the axis O with respect to the rotary shaft 2.

A hole pattern seal (main body) 21A constituting the seal mechanism 20A is disposed on the inner circumference of an annular casing 5 disposed at an interval from the rotary shaft 2. The hole pattern seal 21A has a cylindrical shape, and the rotary shaft 2 is inserted into the hole pattern seal 21A.

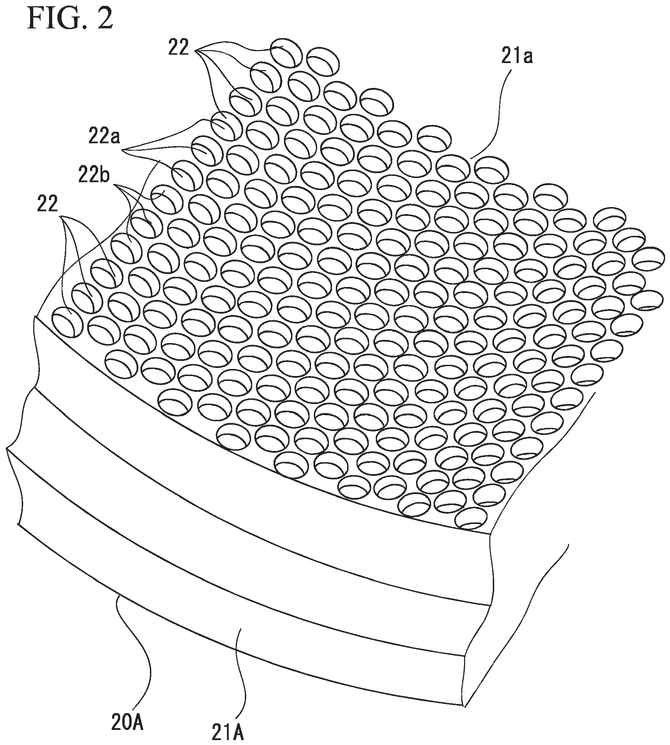

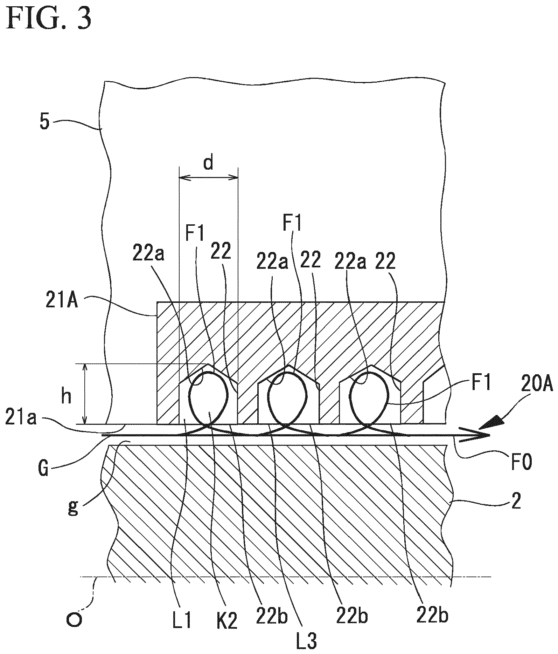

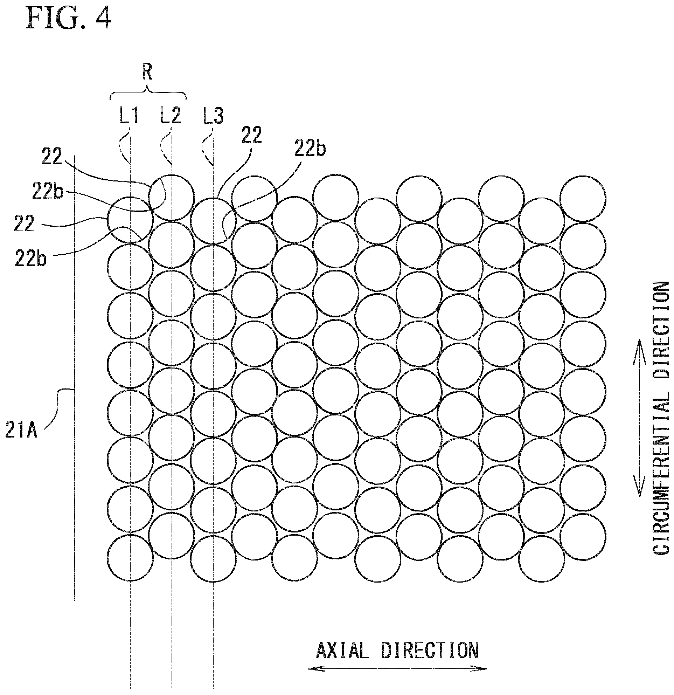

Fig. 2 is a perspective view showing the hole pattern seal of the seal mechanism of the centrifugal compressor. Fig. 3 is a partial cross-sectional view of the seal mechanism of the centrifugal compressor. Fig. 4 is an expanded view of the inner circumferential surface of the hole pattern seal.

As shown in Fig. 2, on an inner circumferential surface 21 a of the hole pattern seal 21A, a plurality of hole portions 22 opened toward the inner circumferential side are formed. The plurality of hole portions 22 are formed in a circular cross-section having the same hole diameter. The hole portions 22 are disposed such that all the their axes (not shown) extend in the radial direction of the rotary shaft 2. As shown in Fig. 3, the bottom surfaces 22a of each hole portion 22 are conical (see Fig. 3). In other words, the bottom surfaces 22a are formed to reduce in diameter toward the outside in the radial direction. Opening portions 22b of the hole portions 22 are disposed on the inner circumferential surface 21a of the hole pattern seal 21A in a zigzag shape.

As shown in Fig. 4, in the hole pattern seal 21A, a first row L1, in which the opening portions 22b of the plurality of hole portions 22 are arranged at equal intervals in the circumferential direction (up-down direction of sheet of Fig. 4), is formed on a first side (a left side of sheet of Fig. 4) serving as the high-pressure side in the direction of the axis O. Further, a third row L3 is formed on a second side (a right side of sheet of Fig. 4) serving as the low-pressure side in the direction of the axis O of the first row L1. In the third row L3, the opening portions 22b of the plurality of hole portions 22 are arranged at equal intervals in the circumferential direction, like the first row L1.

Between the first row L1 and the third row L3, a second row L2 in which the opening portions 22b of the plurality of hole portions 22 are arranged at equal intervals in the circumferential direction is formed. The opening portions 22b constituting the second row L2 are disposed at the center between the adjacent opening portions 22b of the first row L1 (and the third row L3) in the circumferential direction and at positions of the center between the adjacent opening portions 22b in the direction of the axis O of the first row L1 and the third row L3 in the direction of the axis O. In Fig. 4, for convenience of illustration, the reference numerals of the first row L1 to the third row L3 are drawn from a straight line (one-dot chain line in Fig. 4) passing through the center of each opening portion 22b.

In the hole pattern seal 21A, the first row L1 and second row L2 are formed as a set of row groups R, and plurality of sets of row groups R are formed side by side in the direction of the axis O.

Next, the operation of the above-described hole pattern seal 21A will be described with reference to Fig. 3.

Here, when the rotary shaft 2 rotates, a shearing force acts on the process gas G around the rotary shaft 2 in a rotational tangential direction from the rotating body including the impeller 3. A swirling having a velocity component in the circumferential direction is generated by the action of the shearing force. The process gas G including the swirling tries to flow from the high-pressure side to the low-pressure side due to the pressure difference between both sides in the direction of the axis O.

First, the process gas G including the swirling is contracted by a gap g between the end portion on the highest pressure side of the hole pattern seal 21A and the outer circumferential surface 2a of the rotary shaft 2. The process gas G entering the gap g advances toward the low-pressure side in the direction of the axis O. Then, a part of the process gas G is directed toward the hole portion 22 side of the first row L1 of the hole pattern seal 21A.

Next, a part of the process gas G directed toward the hole portion 22 side of the first row L1 enters the interior of the hole portion 22 and turns back toward the opening portion 22b from the bottom surface 22a to become a swirl flow F1. Here, since a partition wall K2 also exists in the hole portion 22 in the circumferential direction, the swirling of the process gas G entering the hole portion 22 collides with the partition wall K2 and is canceled out.

Apart of the process gas G leaving the hole portion 22 interferes with the main flow F0 of the process gas G flowing toward the low-pressure side in the direction of the axis O. The directions of the flow are different between the swirl flow F1 generated by the part of the process gas G generated in the hole portion 22 and the main flow F0 of the process gas G flowing toward the low-pressure side along the direction of the axis O. As a result, the energy of the main flow F0 of the process gas G flowing to the low-pressure side in the direction of the axis O is attenuated.

Furthermore, the process gas G flows toward the low-pressure side in the direction of the axis O, and a part thereof flows into the hole portions 22 after the third row L3. As a result, the process gas G meanders in the radial direction, while advancing in the direction of the axis O of the rotary shaft 2. Thereafter, the aforementioned actions are repeated according to the number of row groups R of the hole pattern seal 21A.

The hole depth h of each hole portion 22 in each row is set to be equal to or smaller than the hole diameter d (h ≤ d).

As the hole depth h increases with respect to the hole diameter d, the flow velocity of the process gas G entering the hole portion 22 becomes slower, and the energy attenuation effect on the main flow F0 of the process gas G decreases. Also, when the hole depth h of the hole portion 22 increases, the machining cost increases.

When the hole depth h is too small with respect to the hole diameter d, the hole portion 22 becomes shallow. Accordingly, it is hard for the process gas G to enter the hole portion 22, and it is difficult to obtain the energy attenuation effect. Further, since scale accumulates in the hole portion 22 and the hole portion 22 easily becomes shallow, the energy attenuation effect also decreases in this respect.

Therefore, the relationship of the hole depth h of the hole portion 22 to the hole diameter d is preferably h ≤ d. More preferably, the relation is d/2 ≤ h ≤ d.

Furthermore, the hole diameters d and the hole depths h of all the hole portions 22 constituting the hole pattern seal 21A are preferably of a uniform size.

Therefore, according to the above-described centrifugal compressor 1 of the first embodiment, the swirl flow F1 formed at the hole portion 22 by a part of the process gas G entering the hole portion 22 of the hole pattern seal 21A can be made to interfere with the main flow F0 flowing toward the low-pressure side in the direction of the axis O without entering the hole portion 22. Therefore, it is possible to attenuate the energy of the main flow F0 of the process gas G and to remove the swirling contained in the process gas G.

Further, by setting the hole depth h of the hole portion 22 to be equal to or smaller than the hole diameter d, the swirl flow F1 is easily generated, and it is possible to effectively exhibit the swirling reduction effect and the energy attenuation effect.

As a result, it is possible to limit self-excited vibration caused by the swirling, while reducing the amount of leakage of the process gas G from the high-pressure side to the low-pressure side.

Further, by unifying the hole diameters d and the hole depths h of all the hole portions 22 of the hole pattern seal 21A to the same size, it is possible to easily and reliably machine the hole portions 22 without mistakes. Further, since the attenuation effects provided by the hole portion 22 are the same in the circumferential direction and the axial direction, it is hard for anisotropy to occur in the attenuation effect.

Furthermore, the bottom surface 22a of the hole portion 22 has a conical shape. As a result, a part of the process gas G entering the hole portion 22 hits against the bottom surface 22a, the direction of flow easily changes, and the swirl flow F1 easily occurs in the hole portion 22.

### [Examples]

Next, the effect of the configuration of the first embodiment was checked by CFD (Computational Fluid Dynamics) analysis.

For comparison, the relationship between the hole depth h and the equivalent attenuation was analyzed under the following three conditions:
Example 1) The hole depth h was set to be equal to the hole diameter d of the hole portion 22 (h = d);
Example 2) The hole depth h was set to 1/2 of the hole diameter d of the hole portion 22 (h = 0.5 d); and
Comparative Example) The hole depth h was set to be double the hole diameter d of the hole portion 22 (h = 2d).

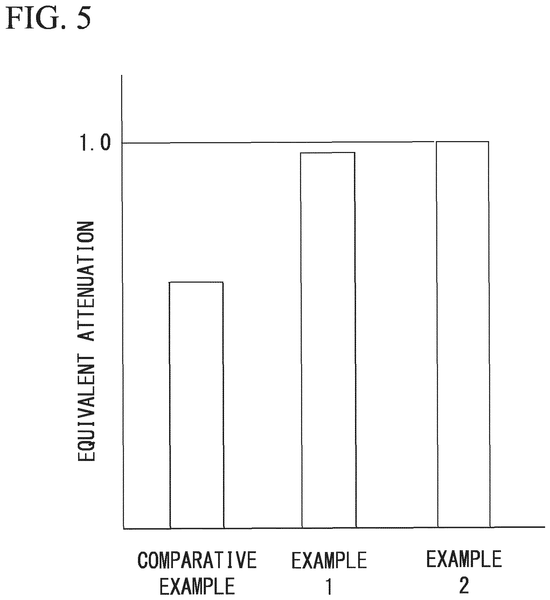

Fig. 5 is a diagram showing a result of analysis of the relationship between the hole depth h and the equivalent attenuation.

As shown in Fig. 5, when the equivalent attenuation of Example 2 was 1.0, the equivalent attenuation of Example 1 was 0.98, and the equivalent attenuation of Comparative Example was 0.6. That is, in Examples 1 and 2 in which the hole depth h was equal to or less than the hole diameter d of the hole portion 22, the equivalent attenuation was equal to or greater than 1.5 times that of the Comparative Example in which the hole depth h was greater than the hole diameter d of the hole portion 22. As a result, it was confirmed that a high attenuation can be obtained by setting the hole depth h to be equal to or less than the hole diameter d of the hole portion 22.

### (Second Embodiment)

Next, a second embodiment of a centrifugal compressor which is a rotating machine according to the present invention will be described. The centrifugal compressor shown in the second embodiment is different from the centrifugal compressor according to the first embodiment only in that a fin portion is provided in a hole pattern seal. Therefore, in the description of the second embodiment, the same parts as those in the first embodiment are denoted by the same reference numerals, and repeated description will not be provided. That is, a description of the overall configuration of the centrifugal compressor shared by the configuration described in the first embodiment will not be provided.

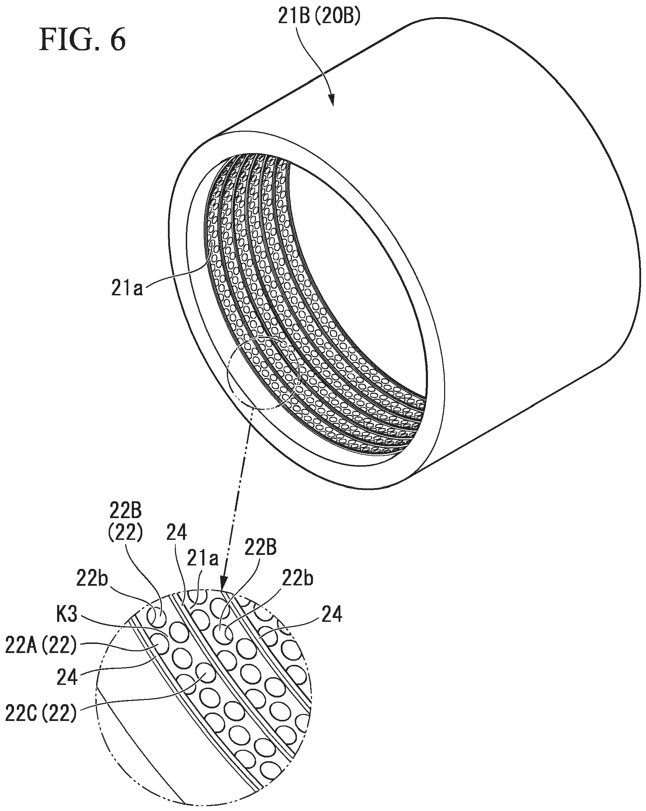

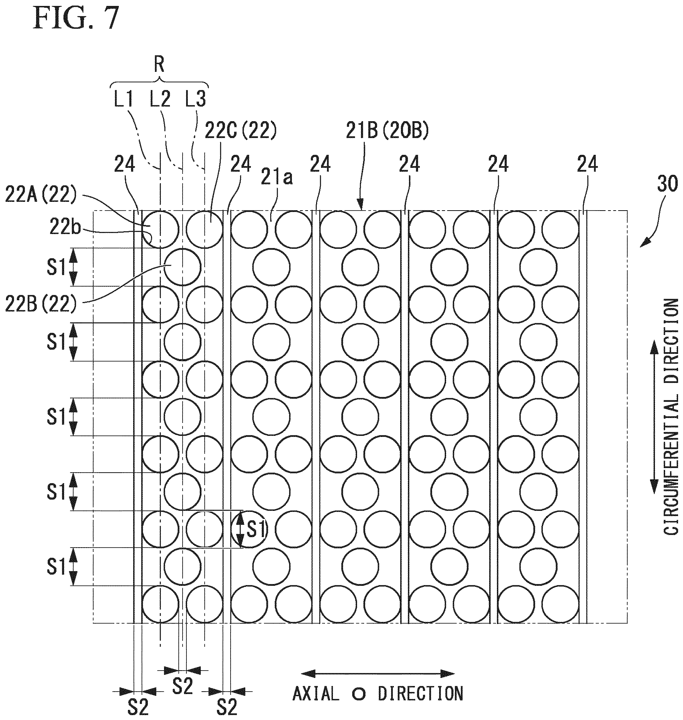

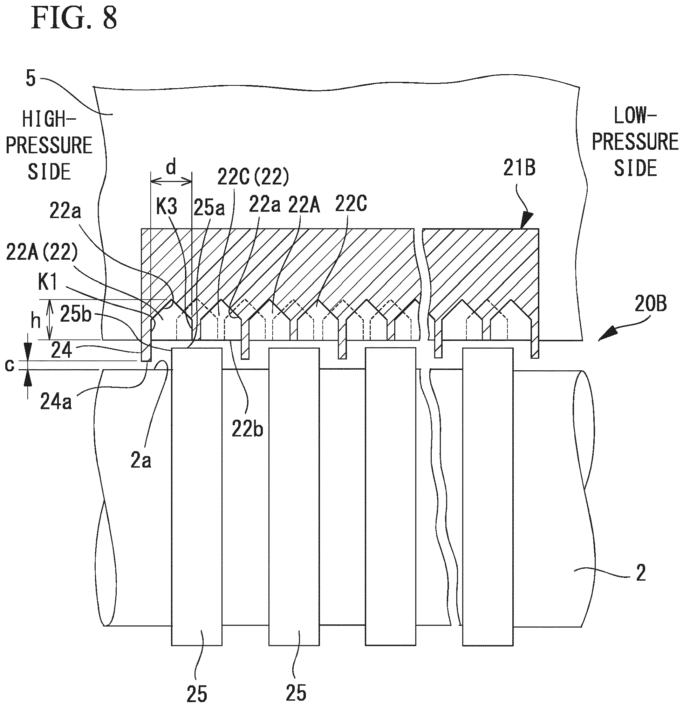

Fig. 6 is a perspective view showing a hole pattern seal in the seal mechanism of the centrifugal compressor according to the second embodiment of the present invention. Fig. 7 is a developed view of the inner circumferential surface of the hole pattern seal. Fig. 8 is a partial cross-sectional view of the seal mechanism in the centrifugal compressor.

As shown in Figs. 6 to 8, the hole pattern seal (main body) 21B of the seal mechanism 20B of the centrifugal compressor 1 in this embodiment has hole portions 22 and fin portions 24 on its inner circumferential surface 21a.

In the hole pattern seal 21B, on a first side (the left side of sheet in Fig. 7) serving as the high-pressure side in the direction of the axis O, a first row L1 in which the opening portions 22b of a plurality of first hole portions 22A are arranged with the same spacing S1 in the circumferential direction (up-down direction of sheet of Fig. 7) is formed. Further, on a second side (the right side of sheet of Fig. 7) serving as the low-pressure side in the direction of the axis O of the first row L1, a third row L3 is formed at an interval S2 sufficiently smaller than the spacing S1. In the third row L3, the opening portions 22b of the plurality of third hole portions 22C are arranged at an interval S1 in the circumferential direction like the first row L1.

Between the first row L1 and the third row L3, a second row L2 is formed in which the opening portions 22b of the plurality of second hole portions 22B are arranged at the space S1 in the circumferential direction. The opening portions 22b constituting the second row L2 are arranged at the center of the space S1 between the adjacent opening portions 22b in the first row L1 (and the third row L3) in the circumferential direction, and at the positions of the center of the space S2 between the adjacent opening portions 22b in the direction of the axis O of the first row L1 and the third row L3 in the direction of the axis O, respectively. In Fig. 7, for convenience of illustration, the reference numerals of the first row L1 to the third row L3 are drawn from a straight line (one-dot chain line in Fig. 7) passing through the center of each opening portion 22b.

In the hole pattern seal 21B, the above-described first row L1 to third row L3 are defined as a set of row groups R, and a plurality of sets of row groups R are formed side by side in the direction of the axis O. The opening portions 22b of the first row L1 and the opening portions 22b of the third row L3 of each row group R adjacent to each other are disposed at a space S2 therebetween.

As shown in Figs. 6 to 8, on the first side serving as the high-pressure side of each row group R, fin portions 24 protruding toward the inner circumference side, that is, toward the rotary shaft 2 side, in the radial direction are formed. The fin portions 24 are continuously formed on the entire circumference of the hole pattern seal 21B in the circumferential direction. The fin portions 24 are formed in an annular plate shape having a uniform thickness. In other words, the fin portions 24 extend from the high-pressure side partition wall K1 (see Fig. 8) surrounding the first hole portions 22A of the first row L1 toward the rotary shaft 2 side. The fin portion 24 is provided on the high-pressure side of each first row L1. On the low-pressure side of the first row L1, a second row L2 and a third row L3 are disposed. The tip portions 24a of the fin portions 24 are disposed at a predetermined clearance C from the outer circumferential surface 2a of the rotary shaft 2.

As shown in Fig. 8, the rotary shaft 2 has a protruding portion 25 on the outer circumferential surface 2a facing the aforementioned hole pattern seal 21B. The protruding portion 25 protrudes toward the hole pattern seal 21B and is continuously formed around the entire circumference in the circumferential direction. The protruding portion 25 faces the opening portions 22b of the first hole portion 22A of the first row L1 on the lower pressure side of each fin portion 24. The vertical wall 25b on the high-pressure side of the protruding portion 25 is disposed on the higher pressure side of the surface on the high-pressure side of the partition wall K3 in the direction of the axis O. The outer circumferential surface 25a of the protruding portion 25 is disposed between fin portions 24 adjacent to each other. In other words, the outer circumferential surface 25a is disposed at a predetermined clearance with respect to the partition wall K3 between the first hole portion 22 of the first row L1 and the third hole portion 22C of the third row L3 to overlap the fin portion 24 as seen from the direction of the axis O. Furthermore, the fin portion 24 is disposed at the center between adjacent protruding portions 25 and 25 in the direction of the axis O. That is, the protruding portion 25 has a symmetrical shape about the central portion between adjacent partition walls K3 in the direction of the axis O.

Here, as in the first embodiment, the hole portions 22 of each row constituting the hole pattern seal 21B preferably have a hole depth h with respect to the hole diameter d of h ≤ d. More preferably, there is a relationship of d/2 ≤ h ≤ d.

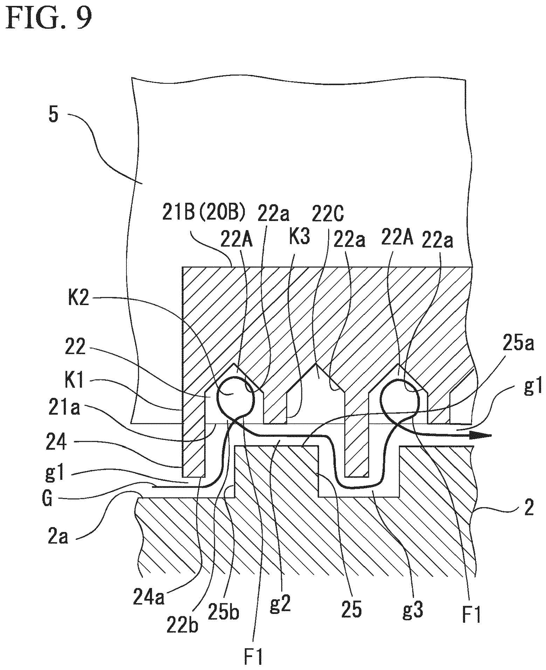

Fig. 9 is an explanatory view of the operation of the seal mechanism.

Next, the operation of the hole pattern seal 21B will be described with reference to Fig. 9.

As shown in Fig. 9, when the rotary shaft 2 rotates, a shearing force acts on the process gas G around the rotary shaft 2 in a rotational tangential direction from the rotating body including the impeller 3. A swirling having a velocity component in the circumferential direction is generated by the action of the shearing force. The process gas G containing the swirling tries to flow from the high-pressure side to the low-pressure side due to the pressure difference between both sides in the direction of the axis O.

First, the process gas G containing the swirling is contracted by the gap g1 between the tip portion 24a of the fin portion 24 on the highest pressure side of the hole pattern seal 21B and the outer circumferential surface 2a of the rotary shaft 2. The process gas G entering the gap g1 moves toward the low-pressure side in the direction of the axis O. Then, the process gas G collides with the vertical wall 25b of the high-pressure side of the protruding portion 25 and flows toward the outer side in the radial direction of the protruding portion 25, that is, toward the first hole portion 22A side of the first row L 1 of the hole pattern seal 21B.

Subsequently, most of the process gas G directed toward the first hole portion 22A side of the first row L1 enters the interior of the first hole portion 22A and is turned back toward the opening portion 22b by the bottom surface 22a to become a swirl flow F1. Here, since the partition wall K2 also exists in the hole portion 22 in the circumferential direction, the swirling of the process gas G entering the first hole portion 22A collides with the partition wall K2 and is canceled out. The process gas G leaving the first hole portion 22A tries to flow toward the low-pressure side, and enters the gap g2 between the partition wall K3 immediately above the protruding portion 25 or the second row L2 and the outer circumferential surface 25a of the protruding portion 25. Thereafter, the process gas G advances toward the gap g3 disposed on the lower pressure side of the outer circumferential surface 25a of the protruding portion 25 and on the inner side in the radial direction, and the process gas meanders in the radial direction at that time. This meandering disturbs the flow so that the same sealing effect as in a general labyrinth seal can be obtained. Thereafter, the aforementioned operations are repeated according to the number of row groups R of the hole pattern seal 21B. Here, a swirl flow F1 of the same degree as with the general hole pattern seal 21B is also generated in the interior of the third hole portion 22C of the third row L3, and the swirl flow contributes to the reduction of the swirling.

Therefore, according to the above-described centrifugal compressor 1 of the second embodiment, the process gas G entering from the gap g1 between the fin portion 24 of the hole pattern seal 21B and the rotary shaft 2 can be brought into contact with the vertical wall 25b of the protruding portion 25 of the rotary shaft 2 to flow toward the hole portion 22 side of the hole pattern seal 21B. Thus, the partition wall K2 disposed on the partition wall of the hole portion 22 in the circumferential direction of the rotary shaft 2 can hinder the flow of the process gas G in the turning direction, thereby reducing the swirling.

Further, since the gaps g1 and g3 formed by the fin portion 24 and the gap g2 formed by the protruding portion 25 are disposed at positions deviated in the radial direction, the process gas G meanders in the radial direction. Therefore, it is possible to reduce the amount of leakage of the process gas G by the so-called sealing effect provided by the labyrinth structure. As a result, it is possible to limit self-excited vibration caused by the swirling, while reducing the amount of leakage of the process gas G from the high-pressure side to the low-pressure side.

Furthermore, by setting the hole depth h of the hole portion 22 to be equal to or smaller than the hole diameter d, it is possible to exhibit the above-described swirling reduction effect and energy attenuation effect.

As a result, it is possible to limit self-excited vibration caused by the swirling, while reducing the amount of leakage of the process gas G from the high-pressure side to the low-pressure side.

Furthermore, it is possible to reduce the swirling and the amount of leakage of the process gas G as the number of row groups R increases, in accordance with the number of the fin portions 24 and the protruding portions 25 provided between the high-pressure side and the low-pressure side on which the hole pattern seal 21B is formed, that is, the number of row groups R formed.

### (Other Embodiments)

The present invention is not limited to each of the aforementioned embodiments, and the design can be changed within a range that does not depart from the gist of the present invention.

For example, in the second embodiment, although the fin portions 24 are provided, the interval at which the fin portions 24 are provided, that is, the number of rows of the hole portions 22 constituting each row group R can be suitably changed.

Further, for example, in each of the aforementioned embodiments, although the hole portions 22 are disposed in a zigzag shape in the hole pattern seals 21A and 21B, it is possible to suitably set the space in the circumferential direction and in the axial direction.

The hole portions 22 constituting the hole pattern seals 21A and 21B are not limited to a zigzag shape in which the rows of hole portions 22 adjacent to each other in the axial direction are phased in the circumferential direction, and the spaces and phases of the hole portions 22 adjacent to each other may be disposed as a uniform square array.

Further, in each of the aforementioned embodiments, the tip portion 24a of the fin portion 24 extends in the radial direction, but the fin portion 24 may be formed in an inclined state such that the tip portion 24a is disposed on the higher pressure side of the base portion 24b.

Furthermore, in each of the aforementioned embodiments, the fin portion 24 is formed to have a constant thickness, but the fin portion 24 may be formed in a tapered shape in which the width size is formed to become thinner toward the tip portion 24a.

Furthermore, in each of the aforementioned embodiments, the hole portions 22 constituting the hole pattern seals 21A and 21B of the seal mechanisms 20A and 20B are formed to have a circular cross-section having a substantially equal hole diameter d, but the present invention is not limited thereto. For example, the hole diameter d may be varied, depending on the axial position, the circumferential position or the like of the hole portions 22.

In addition, the hole portion 22 is not limited to a circular cross-section, and may constitute a so-called honeycomb seal having a hexagonal cross-section.

Further, the bottom surface 22a of the hole portion 22 is not limited to a conical shape, and may be a flat bottom.

Even in these cases, by setting the relationship between the hole diameter d and the hole depth h of the hole portion 22 similarly to the aforementioned embodiments, the same operation and effect can be obtained.

### [Industrial Applicability]

By setting the hole depth of the hole portion constituting the seal mechanism to be equal to or less than the hole diameter, it is possible to limit self-excited vibration due to the swirling, while reducing the amount of leakage of the process gas G from the high-pressure side to the low-pressure side.

### [Reference Signs List]

- 1: Centrifugal compressor
- 2: Rotary shaft (rotor)
- 2a: Outer circumferential surface
- 3: Impeller
- 3A: Three-stage impeller group
- 3B: Three-stage impeller group
- 3a: Disk
- 3b: Blade
- 3c: Cover portion
- 4: Return flow passage
- 5: Casing (stator)
- 5a: Journal bearing
- 5b: Thrust bearing
- 5c: Suction port
- 5d: Discharge port
- 5e: Suction port
- 5f: Discharge port
- 6: Internal space
- 6a: Internal space
- 6b: Internal space
- 12: Diffuser portion
- 13: Bend portion
- 14: Return portion
- 20A, 20B: Seal mechanism
- 21A, 21B: Hole pattern seal (main body)
- 21 a: Inner circumferential surface
- 22: Hole portion
- 22A: First hole portion
- 22B: Second hole portion
- 22C: Third hole portion
- 22a: Bottom surface
- 22b: Opening portion
- 24: Fin portion
- 24a: Tip portion
- 24b: Base portion
- 25: Protruding portion
- 25a: Outer circumferential surface
- 25b: Vertical wall
- C: Clearance
- D: Hole diameter
- F0: Main flow
- F1: Swirl flow
- H: Hole depth
- G: Process gas
- g1, g2, g3: Gap
- K1, K2, K3: Partition wall
- L1: First row
- L2: Second row
- L3: Third row
- O: Axis
- R: Row group
- S1, S2: Space

## Claims

1. A seal mechanism which is disposed on an outer circumferential side of a rotor extending along an axis to perform sealing between the seal mechanism and the outer circumferential surface of the rotor, the seal mechanism comprising:
a cylindrical main body portion into which the rotor is inserted; and
a plurality of hole portions formed on an inner circumferential surface of the main body portion to face an outer circumferential surface of the rotor,
wherein the hole portions are within a range in which a hole depth h is equal to or smaller than a hole diameter d.

2. The seal mechanism according to claim 1, wherein the hole portions are formed such that a relationship between the hole depth h and the hole diameter d is 0.5≤h≤d.

3. The seal mechanism according to claim 1 or 2, wherein the hole portions have a circular cross-section or a hexagonal cross-section.

4. The seal mechanism according to any one of claims 1 to 3, wherein the hole diameters d and the hole depths h of the plurality of hole portions are unified to the same size.

5. The seal mechanism according to any one of claims 1 to 4, wherein bottom surfaces of the hole portions have a conical shape or a flat bottom shape.

6. The seal mechanism according to any one of claims 1 to 5, wherein a fin portion protruding toward the rotor side and extending in a circumferential direction is provided on an inner circumferential surface of the main body portion.

7. A rotating machine comprising:
a rotor extending along an axis;
a stator which is disposed on an outer circumferential side of the rotor and relatively rotates about the axis with respect to the rotor; and
a hole pattern seal which is fixed to the stator to partition a space between the rotor and the stator into a high-pressure side and a low-pressure side, and has a hole row in which a plurality of hole portions facing the outer circumferential surface of the rotor are formed at an interval in a circumferential direction,
wherein the hole portions are within a range in which a hole depth h is equal to or smaller than a hole diameter d.

8. The rotating machine according to claim 7, further comprising:
a fin portion which is formed on the inner circumferential surface of the hole pattern seal, protrudes toward the rotor side and extends in the circumferential direction; and
a protruding portion which protrudes from the outer circumferential surface of the rotor toward the hole portion, extends in the circumferential direction and faces the hole portion on the low-pressure side of the fin portion.
